# EUROPÄISCHE PATENTSCHRIFT

(11) **EP 0 766 749 B1**
(45) Veröffentlichungstag und Bekanntmachung des Hinweises auf die Patenterteilung: **19.05.1999**
(21) Anmeldenummer: 95924249.6
(22) Anmeldetag: 16.06.1995
(51) Int. Cl.: C22B 3/38, C22B 3/40, C22B 3/42, C22B 3/26

(54) **VERWENDUNG VON KOHLENWASSERSTOFFLÖSLICHEN AMINOMETHYLENPHOSPHONSÄURE-DERIVATEN ZUR SOLVENTEXTRAKTIVEN ABTRENNUNG VON EISENIONEN AUS WÄSSRIGEN LÖSUNGEN**
USE OF HYDROCARBON-SOLUBLE AMINOMETHYLENE PHOSPHONIC ACID DERIVATIVES IN THE SOLVENT EXTRACTION OF IRON IONS FROM AQUEOUS SOLUTIONS
UTILISATION DE DERIVES D'ACIDE PHOSPHONIQUE D'AMINOMETHYLENE SOLUBLES DANS DES HYDROCARBURES POUR SEPARER PAR EXTRACTION PAR SOLVANT DES IONS DE FER CONTENUS DANS DES SOLUTIONS AQUEUSES

(30) Priorität: 23.06.1994 DE 4421932
(43) Veröffentlichungstag der Anmeldung: 09.04.1997
(60) Teilanmeldung: 98120369.8
(73) Patentinhaber: BASF AKTIENGESELLSCHAFT, 67056 Ludwigshafen (DE)
(72) Erfinder: EHLE, Michael, D-67069 Ludwigshafen (DE); OPPENLÄNDER, Knut, D-67061 Ludwigshafen (DE)
(86) Internationale Anmeldenummer: EP9502327
(87) Internationale Veröffentlichungsnummer: WO9600309

(56) Entgegenhaltungen:
- EP-A- 0 350 172
- WO-A-90/05115
- WO-A-91/02011
- DE-A- 3 801 430
- FR-A- 1 342 412
- GB-A- 970 011
- US-A- 4 741 831
- US-A- 4 758 414
- PATENT ABSTRACTS OF JAPAN vol. 9, no. 211 (C-300) 29. August 1985 & JP,A,60 077 936 (UNITAKA KK) 2. Mai 1985 in der Anmeldung erwähnt

## Beschreibung

Die vorliegende Erfindung betrifft die Verwendung von kohlenwasserstofflöslichen Aminomethylenphosphonsäure-Derivaten, welche das Strukturelement der Formel I 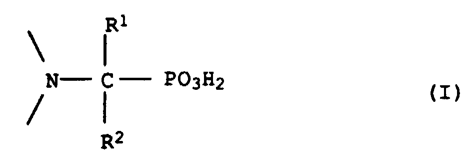 enthalten, wobei R¹ und R² für Wasserstoff, C₁- bis C₃₀-Alkyl, welches zusätzlich bis zu 15 Hydroxylgruppen tragen und/oder durch bis zu 14 nicht benachbarte Sauerstoffatome unterbrochen sein kann, C₂- bis C₃₀-Alkenyl, C₇- bis C₁₈-Aralkyl oder C₆- bis C₁₄-Aryl, welches durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein kann, steht, zur solventextraktiven Abtrennung von Eisenionen aus wäßrigen Lösungen.

Weiterhin betrifft die Erfindung die zusätzliche Verwendung von bestimmten Modifiern für derartige solventextraktive Abtrennungen von Eisenionen oder allgemein Metallionen aus wäßrigen Lösungen.

Die Abtrennung von Eisenionen aus wäßrigen Lösungen ist insbesondere bei der hydrometallurgischen Nichteisenmetall-Produktion, z.B. bei der Gewinnung von Kupfer oder Zink, von Bedeutung. Häufig werden Wertmetall-Lösungen aus Erzen durch Aufschluß oder Auslaugung mit wäßrigen, meist sauren Systemen erhalten, aus denen das Störmetall Eisen abgetrennt werden muß. Darüber hinaus spielt heute besonders auch die Aufbereitung von metallhaltigen Abfällen oder Rückständen (z.B. Flugstäuben oder Fällungsschlämmen aus der Abwasserbehandlung) und das Recycling von verbrauchten Wertmetallprodukten (z.B. Katalysatoren) eine immer wichtiger werdende Rolle bei der Bereitstellung von wäßrigen Wertmetall-Lösungen. Unabhängig vom Ursprung der Metallsalzlösungen ist es stetiges Bemühen, Störelemente, insbesondere das Störmetall Eisen, von diesen Wertmetall-Lösungen abzutrennen, damit reine Metalle gewonnen werden können. Neben der Verbesserung der Qualität der Wertmetalle wird auch eine Wiedergewinnung des Eisens und die Entlastung von Deponieflächen aufgrund ökonomischer und ökologischer Überlegung angestrebt.

Die Solventextraktion von Eisenionen ist in der Literatur bekannt. So wird in der DE-A 38 01 430 (1) die Verwendung eines Gemisches aus einem primären Amin und einem Alkylphosphonsäuremonoester wie 2-Ethylhexylphosphonsäure-mono-2-ethylhexylester zur solventextraktiven Entfernung von Eisen(III)-ionen aus sauren Zinksalzlösungen beschrieben.

Weiterhin ist aus der JP-A 1985/077936 (2) bekannt, daß sich Aminomethylenphosphonsäure-Derivate zur Solventextraktion von Uran, Antimon oder Wismut eignen.

Die US-A 4 741 831 (3) betrifft ein Verfahren zur Abtrennung von Metallen wie Eisen, Kobalt, Kupfer, Vanadium, Cadmium, Nickel, Zink, Blei oder Aluminium aus wäßrigen Lösungen unter Verwendung von wasserlöslichen polymeren Komplexbildnern, beispielsweise Polyethyleniminphosphonaten. Dabei erfolgt die anschließende Abtrennung des Metallkomplexes durch Dialyse oder Ultrafiltration mittels Membranen.

Die geschilderten Verfahren des Standes der Technik weisen jedoch noch Nachteile auf. Sie sind meist zu wenig effizient und zu unwirtschaftlich. Insbesondere die Selektivität der Trennung der Störmetalle von den Wertmetallen und die Beladungskapazität der eingesetzten Komplexbildner sind noch verbesserungsbedürftig.

Aufgabe der vorliegenden Erfindung war es daher, ein verbessertes System zur Solventextraktion von Eisenionen aus wäßrigen Lösungen zu finden, das die Nachteile des Standes der Technik nicht mehr aufweist.

Demgemäß wurde die eingangs definierte Verwendung der kohlenwasserstofflöslichen Aminomethylenphosphonsäure-Derivate, die das Strukturelement I aufweisen, gefunden.

Vorzugsweise werden solche kohlenwasserstofflösliche Aminomethylenphosphonsäure-Derivate verwendet, die das Strukturelement der Formel Ia 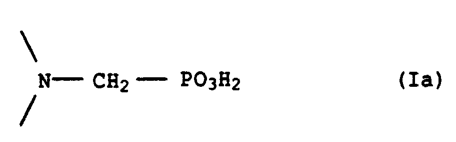 enthalten (R¹ = R² = H).

Besonders bevorzugt werden für den genannten Zweck kohlenwasserstofflösliche Aminomethylenphosphonsäure-Derivate der allgemeine Formel II 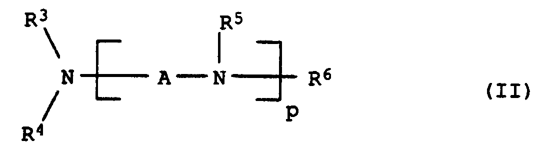 in der
- R³ bis R⁶: jeweils für Wasserstoff, C₁- bis C₃₀-Alkyl, welches zusätzlich bis zu 15 Hydroxylgruppe tragen und/oder durch bis zu 14 nicht benachbarte Sauerstoffatome unterbrochen sein kann, C₂- bis C₃₀-Alkenyl, C₇- bis C₁₈-Aralkyl, C₆- bis C₁₄-Aryl, welches durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein kann, oder Gruppierungen der Formel -CR¹R²-PO₃H₂, -CH₂-COOH oder -CH₂-CH(OH)-R¹ steht, wobei mindestens einer der Reste R³ bis R⁶ für die Gruppierung -CR¹R²-PO₃H₂ und mindestens ein weiterer für C₆- bis C₃₀-Alkyl, C₆- bis C₃₀-Alkenyl, C₇- bis C₁₈-Aralkyl, gegebenenfalls substituiertes C₆- bis C₁₄-Aryl oder für die Gruppierung -CH₂-CH(OA)-R⁹, wobei R⁹ C₆- bis C₃₀-Alkyl, C₆- bis C₃₀-Alkenyl, C₇- bis C₁₈-Aralkyl oder gegebenenfalls substituiertes C₆- bis C₁₄-Aryl bedeutet, steht und wobei R¹ und R² die oben genannten Bedeutungen haben,
- A: eine C₁- bis C₁₂-Alkylengruppe bezeichnet, welche zusätzlich bis zu drei C₁- bis C₃₀-Alkylgruppen, C₂- bis C₃₀-Alkenylgruppen, C₇- bis C₁₈-Aralkylgruppen oder C₆- bis C₁₄-Arylgruppen, welche ihrerseits wiederum durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein können, als Substituenten tragen können, wobei bei Vorliegen mehrerer Gruppen A diese gleich oder verschieden sein können, und
- p: eine Zahl 0 bis 30 000 bedeutet.

Die Verbindungen II können als Monomere (p = O), Oligomere oder Polymere vorliegen.

Als geradkettige oder verzweigte Alkylreste für R¹ bis R⁹ und als Substituenten an Arylgruppen, die als C₁- bis C₃₀-, C₆- bis C₃₀- oder C₁- bis C₁₂-Alkylreste angesprochen sind, eignen sich beispielsweise Methyl, Ethyl, n-Propyl, iso-Propyl-, n-Butyl-, iso-Butyl, sec.-Butyl, tert.-Butyl, n-Amyl, iso-Amyl, sec.-Amyl, tert.-Amyl, Neopentyl, n-Hexyl, n-Heptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Pentadecyl, n-Hexadecyl, n-Heptadecyl, n-Octadecyl und n-Eicosyl.

Als zusätzlich bis zu 15, insbesondere bis zu 10, vor allem bis zu 5 Hydroxylgruppen tragende und/oder durch bis zu 14, insbesondere durch bis zu 9, vor allem durch bis zu 4 nicht benachbarte Sauerstoffatome unterbrochene Alkylreste eignen sich beispielsweise entsprechende Polyoxyalkylenketten, insbesondere Polyoxyethylenketten, deren endständige Hydroxylgruppen durch Alkylreste verethert sein können, wie Gruppierungen der Formel -CH₂CH₂-OH, -CH₂CH₂-O-CH₃, -CH₂CH₂-O-CH₂CH₂-OH, -CH₂CH₂-O-CH₂CH₂-O-CH₃, -CH₂CH₂CH₂-OH, -CH₂CH₂CH₂-O-CH₂CH₃, -CH₂CH₂-O-CH₂CH₂-O-CH₂CH₂-OH oder -CH₂CH₂-O-CH₂CH₂-O-CH₂CH₂-O-CH₂CH₂-OH.

Bevorzugt werden hiervon bei R¹ und R² und als Substituenten an Arylgruppen generell niedere Alkylreste, insbesondere C₁- bis C₁₂-Alkylreste, vor allem jedoch C₁- bis C₄-Alkylreste, hierbei insbesondere Ethyl und Methyl.

Bei langkettigen C₆- bis C₃₀-Alkylresten R³ bis R⁹ eignen sich insbesondere C₈- bis C₂₀-Alkyl-Reste. Oft zeigen hierbei Reste mit geringem Verzweigungsgrad, d.h. mit bis zu 5 Methyl- oder Ethyl-Seitenketten, besonders gute Wirkung.

Als geradkettige oder verzweigte C₂- bis C₃₀- bzw. C₆- bis C₃₀-Alkenylreste für R¹ bis R⁹ eignen sich beispielsweise Vinyl, Allyl, Methallyl und But-2-enyl sowie als langkettige Reste Oleyl, Linolyl und Linolenyl.

Als C₇- bis C₁₈-Aralkylreste für R¹ bis R¹⁰ eignen sich beispielsweise Naphthylmethyl, Diphenylmethyl oder Methylbenzyl, insbesondere jedoch C₇- bis C₁₈-Phenylalkyl wie 1-Phenylethyl, 2-Phenylethyl, 1-Phenylpropyl, 2-Phenylpropyl, 3-Phenylpropyl, 2-Phenylprop-2-yl, 4-Phenylbutyl, 2,2-Dimethyl-2-phenylethyl, 5-Phenylamyl, 10-Phenyldecyl, 12-Phenyldodecyl oder vor allem Benzyl.

Als C₆- bis C₁₄-Arylreste für R¹ bis R¹⁰ kommen beispielsweise Diphenyl, Naphthyl, Anthryl sowie vor allem Phenyl in Betracht, welche wie angegeben substituiert sein können. Treten derartige Substituenten an Phenylkernen auf, ist der bevorzugte Substitutionsgrad 2 oder insbesondere 1. Einfach substituierte Phenylreste sind ortho-, meta- oder vorzugsweise para-substitutiert, zweifach substituierte Phenylreste weisen häufig ein 2,4-Substitutionsmuster und dreifach substituierte Phenylreste oft ein 2,4,6-Substitutionsmuster auf. Beim Auftreten von zwei oder drei Substituenten können diese gleich oder verschieden sein.

Typische Substituente an den Arylresten, insbesondere an den Phenylkernen, sind Methylgruppen (o-, m-, p-Tolyl, 2,4-Dimethylphenyl, Mesityl), Methoxygruppen, Methoxycarbonyl- und Ethoxycarbonylgruppen.

Als weitere geradkettige oder verzweigte C₁- bis C₁₂-Alkoxygruppen neben Methoxy, insbesondere als Substituenten am Phenylkern, eignen sich vor allem C₂- bis C₄-Alkoxygruppen wie Ethoxy, n-Propoxy, iso-Propoxy, n-Butoxy, iso-Butoxy, sec.-Butoxy und tert.-Butoxy, daneben aber auch n-Pentoxy, n-Hexoxy, iso-Hexoxy, n-Heptoxy, iso-Heptoxy, n-Octoxy, 2-Ethylhexoxy, iso-Octoxy, n-Nonoxy, n-Decoxy, n-Undecoxy und n-Dodecoxy.

Unter Halogenatomen sind Fluor, Jod, vor allem jedoch Brom und insbesondere Chlor zu verstehen.

Gruppierungen der Formel -CH₂-CH(OH)-R⁹ leiten sich beispielsweise von langkettigen epoxidierten α-Olefinen wie 1,2-Epoxyhexan, 1,2-Epoxyoctan, 1,2-Epoxydecan, 1,2-Epoxydodecan, 1,2-Epoxytetradecan, 1,2-Epoxyhexadecan oder 1,2-Epoxyoctadecan oder von Styroloxid ab.

Das Brückenglied A bezeichnet vorzugsweise eine C₂- bis C₈-Alkylengruppe, insbesondere eine C₃- bis C₆-Alkylengruppe. A kann verzweigt oder vorzugsweise geradkettig sein, d.h. eine Polymethylen-Struktur aufweisen. Typische Beispiele für A sind Methylen, 1,2-Ethylen, 1,2-Propylen, 1,3-Propylen, Dimethylmethylen, Ethylmethylen, 1,2-Butylen, 1,3-Butylen, 2,3-Butylen, 1,4-Butylen, Pentamethylen, Hexamethylen und Octamethylen.

Liegen mehrere Gruppen A vor, können diese auch verschieden sein, z.B. kann als Strukturelement die Gruppierung der Formel 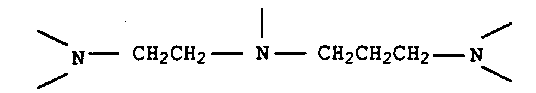 auftreten.

Im Falle einer Substitution von A durch die angegebenen Reste haben diese Substituenten die gleiche Bedeutung wie oben für R¹ bis R⁶ angegeben.

Der Oligomerisations- bzw. Polymerisationsgrad p beträgt bei Oligomeren vorzugsweise 0 bis 20, insbesondere 0 bis 5, vor allem 0 oder 1, und bei Polymeren vorzugsweise 20 bis 30 000, insbesondere 20 bis 5000, vor allem 20 bis 100.

Typische Beispiele für monomere Verbindungen II (p = 0) sind Strukturen der folgenden Typen:

(R⁷)₂N-CH₂-PO₃H₂

H₂O₃P-CH₂-NR⁷-CH₂-PO₃H₂

Typische Beispiele für oligomere Verbindungen II (meist p - 1) sind Strukturen der folgenden Typen:

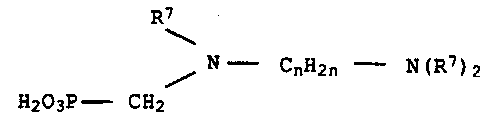

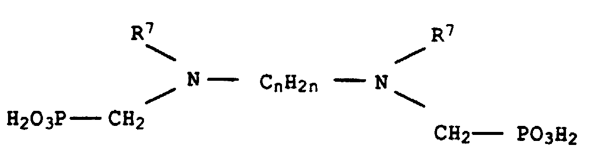

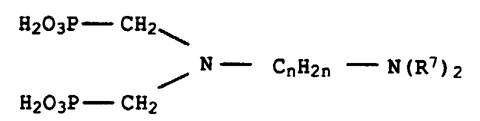

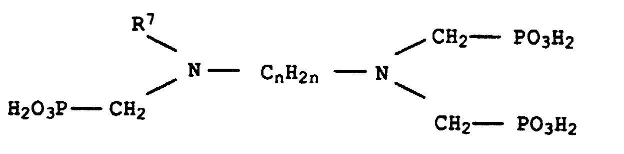

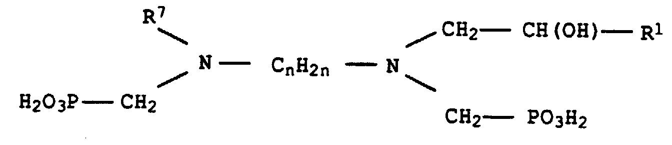

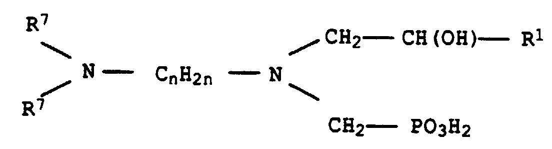

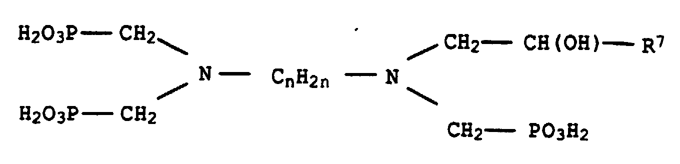

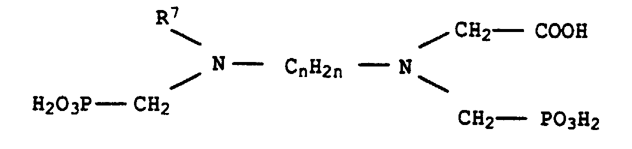

In den genannten Formeln bezeichnet R⁷ C₆- bis C₃₀-Alkyl oder C₆- bis C₃₀-Alkenyl, n steht für eine Zahl von 2 bis 6 und R¹ hat die oben genannte Bedeutung.

Typische Beispiele für polymere kohlenwasserstofflösliche Aminomethylenphosphonsäure-Derivate im Sinne der Erfindung sind Polyalkylenpolyamine und Polyalkylenpolyamide mit mindestens einer Gruppierung der Formel -CR¹R²-PO₃H₂ und mindestens einem weiteren C₆- bis C₃₀-Alkylrest, C₆- bis C₃₀-Alkenylrest, C₇- bis C₁₈-Aralkylrest, gegebenenfalls substituierten C₆- bis C₁₄-Arylrest oder einer Gruppierung der Formel -CH₂-CH(OH)-R⁹, wobei R¹, R² und R⁹ die oben genannten Bedeutungen haben, insbesondere entsprechend substituierte Polyethylenimine, Polyvinylamine und Polyacrylamide, beispielsweise der Struktur:

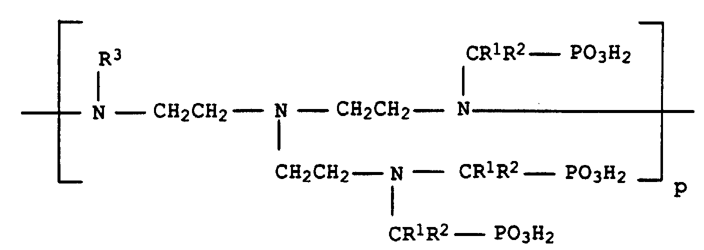

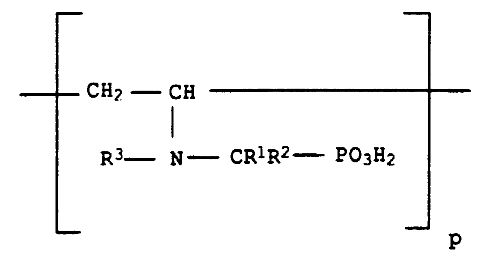

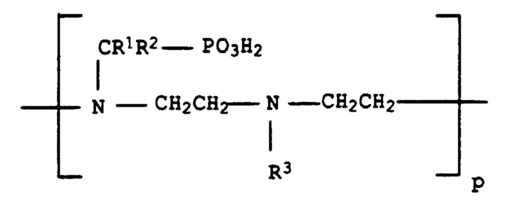

In den genannten Formeln haben R³ und p die oben genannten Bedeutungen.

Die beschriebenen Polyalkylenpolyamine können lineare oder verzweigte Strukturen aufweisen. Als Brückenglieder zwischen den Stickstoffatomen in der Polymerhauptkette treten vorzugsweise Ethylen- oder Propylengruppierungen, aber auch Methylen-, Butylen-, Pentylen- oder Hexylengruppierungen, oder Gemische hieraus auf.

Zur geringfügigen Modifizierung der Eigenschaften der beschriebenen Polyalkylenpolyamine im Sinne der Optimierung für den erfindungsgemäßen Verwendungszweck können diese Polymere in entsprechendem Grad mit passenden Endgruppen funktionalisiert, vernetzt oder als Copolymere oder Pfropfpolymere zur Verfügung gestellt werden.

Zur Einführung passender Endgruppen können die Polyalkylenpolyamine mit C₁- bis C₃₀-Alkylhalogeniden, z.B. Methyliodid, Ethylchlorid oder Ethylbromid, mit Benzylhalogeniden, mit Halogenhydrinen, z.B. Chlorhydrin, mit Polyalkylenoxiden, mit epoxidierten α-C₃- bis C₃₀-Olefinen, mit Isocyanaten oder mit C₁- bis C₃₀-Monocarbonsäuren umgesetzt werden.

Als Vernetzer kommen beispielsweise Epihalogenhydrine, z.B. Epichlorhydrin, α,ω-Bis(epoxide), α,ω- oder vicinale Dichloralkane, z.B. 1,2-Dichlorethan, C₂- bis C₃₀-Dicarbonsäuren, z.B. Adipinsäure, und Diisocyanate, z.B. Hexamethylendiisocyanat, in Betracht.

Geeignete Polyvinylamin-Copolymerisate enthalten beispielsweise als andere monoethylenisch ungesättigte Monomere Vinylester gesättigter Carbonsäuren mit 1 bis 6 Kohlenstoffatomen, z.B. Vinylacetat, Vinylpropionat und Vinylbutyrat, monoethylenisch ungesättigte C₃- bis C₈-Carbonsäuren, wie Acrylsäure, Methacrylsäure, Dimethylacrylsäure, Ethacrylsäure, Crotonsäure, Vinylessigsäure, Allylessigsäure, Maleinsäure, Fumarsäure, Citraconsäure und Itaconsäure sowie deren Ester, Anhydride, Amide und Nitrile. Bevorzugt eingesetzte Anhydride sind beispielsweise Maleinsäureanhydrid, Citraconsäureanhydrid und Itaconsäureanhydrid. Geeignete Ester leiten sich beispielsweise von Alkoholen mit 1 bis 6 C-Atomen ab, wie Methacrylat, Methylmethacrylat, Ethylacrylat, Ethylmethacrylat, Isobutylacrylat, Hexylacrylat oder von Glykolen oder Polyalkylenglykolen, wobei jeweils nur eine OH-Gruppe der Glykole oder Polyglykole mit einer monoethylenisch ungesättigten Carbonsäure verestert ist, z.B. Hydroxyethylacrylat, Hydroxymethacrylat, Hydroxypropylacrylat, Hydroxypropylmethacrylat, Hydroxybutylacrylat, Hydroxybutylmethacrylat sowie Acrylsäuremonoester von Polyalkylenglykolen eines Molekulargewichts bis zu 10 000. Außerdem eignen sich Ester der genannten Carbonsäuren mit Aminoalkoholen, z.B. Dimethylaminoethylacrylat, Dimethylaminoethylmethacrylat, Diethylaminoethyacrylat, Diethylaminoethylmethylacrylat, Dimethylaminopropylacrylat und Dimethylaminopropylmethacrylat. Geeignete Amide sind beispielsweise Acrylamid, Methacrylamid wie N-Alkyl- und N-Dialkylamide mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert.-Butylacrylamid sowie basische Amide wie Dimethylaminoethylacrylamid, Dimethylaminoethylmethacrylamid, Diethylaminoethylmethacrylamid, Diethylaminoethylacrylamid, Dimethylaminopropylacrylamid, Diethylaminopropylacrylamid, Diethylaminopropylmethacrylamid und Dimethylaminopropylmethacrylamid. Die basischen Acrylate und Acrylamide können in Form der freien Basen, der Salze mit Mineralsäuren oder Carbonsäuren oder auch in quaternierter Form eingesetzt werden. Außerdem eignen sich als Comonomere Acrylnitril, Methacrylnitril, N-Vinylpyrrolidon, N-Vinylcaprolactam, N-Vinylimidazol sowie substituierte N-Imidazole wie N-Vinyl-2-methylimidazol und N-Vinyl-2-ethylimidazol und N-Vinylimidazolin und substituierte N-Vinylimidazoline, z.B. N-Vinyl-2-methylimidazolin. Außer den genannten Monomeren können auch Sulfogruppen enthaltende Monomere wie beispielsweise Vinylsulfonsäure, Allylsulfonsäure, Styrolsulfonsäure und Acrylsäure-3-sulfopropylester als andere monoethylenisch ungesättigte Monomere eingesetzt werden.

Die genannten Copolymerisate haben K-Werte von 10 bis 300, vorzugsweise 20 bis 200. Die K-Werte werden bestimmt nach H. Fikentscher in 5 %iger wäßriger Kochsalzlösung bei pH 7, einer Temperatur von 25°C und einer Polymerkonzentration von 0,1 Gew.-%.

Es ist auch möglich, auf Polyvinylamine aufgepfropfte Polyethylenimine einzusetzen.

Für die erfindungsgemäße Verwendung der Verbindungen II und der genannten Polyalkylenpolyamine ist die Anwesenheit mindestens einer Methylenphosphonsäure-Gruppierung -CR¹R²-PO₃H₂ und mindestens eines hydrophoben Restes, d.h. einer Aromaten-Gruppierung oder vorzugsweise eines gesättigten oder ungesättigten langkettigen aliphatischen Restes (C₆- bis C₃₀-Alk(en)yl), von entscheidender Bedeutung. Die Methylenphosphonsäure-Gruppierungen sind im wesentlichen für die selektive Komplexierung (Extraktion) der Eisenionen verantwortlich und die hydrophoben Reste bewirken die Kohlenwasserstofflöslichkeit der Verbindungen.

Die erfindungsgemäß zu verwendenden kohlenwasserstofflöslichen Aminomethylenphosphonsäure-Derivate lassen sich nach gängigen Methoden herstellen. Verbindungen mit R¹ = R² = Wasserstoff können am einfachsten durch Umsetzung von entsprechenden Aminen mit Formaldehyd (oder Paraformaldehyd) und phosphoriger Säure unter Säurekatalyse (z.B. anorganische Säuren oder Mineralsäuren wie Schwefelsäure oder Salzsäure, Sulfonsäuren wie p-Toluolsulfonsäure oder Methansulfonsäure oder Carbonsäuren wie der Mischung Eisessig/Acetanhydrid) erhalten werden.

Derartige Umsetzungen von Aminen mit Formaldehyd und phosphoriger Säure werden üblicherweise bei 0 bis 150°C, insbesondere 50 bis 120°C, vor allem 80 bis 110°C, durchgeführt. Amin, Formaldehyd und phosphorige Säure werden vorteilhafterweise, bezogen auf eine N-H-Bindung, im molaren Verhältnis von 1 : (2 bis 6) : (1 bis 4) eingesetzt.

Alternativ können diese Verbindungen auch durch Hydrolyse entsprechender Phosphonsäureester, zugänglich durch Umsetzung mit Phosphiten anstelle von phosphoriger Säure, erhalten werden.

Ein anderer Syntheseweg, der insbesondere für Verbindung mit R¹, R² ≠ H von Interesse ist, geht von Aldehyden (z.B. der Formel R¹-CHO) oder Ketonen (z.B. der Formel R¹-CO-R²) und den entsprechenden primären Aminen aus, welche zu Iminen umgesetzt werden, an die dann phosphorige Säure angelagert wird.

Unter dem Begriff Solventextraktion werden üblicherweise solche Extraktionsverfahren verstanden, bei denen zwei flüssige Phasen, die miteinander wenig oder nicht mischbar sind, in innigen Kontakt gebracht werden und wobei ein Übergang einer oder mehrerer Komponenten - hier Eisenionen - von der einen in die andere Phase stattfindet. Üblicherweise stellt sich dabei ein von verschiedenen äußeren Parametern abhängiges Gleichgewicht ein. Wichtige Parameter in diesem Zusammenhang sind die Verweilzeit (Kontaktierungszeit), die Temperatur, die Konzentration (Gemischzusammensetzung) und der pH-Wert.

In den aufzuarbeitenden wäßrigen Wertmetall-Lösungen liegt das störende Eisen in der Regel als Eisen(III)-ionen vor. Die erfindungsgemäße Solventextraktion liefert besonders gute Ergebnisse, wenn die vorliegenden wäßrigen Lösungen stark sauer sind, d.h. einen pH-Wert von kleiner 0 bis 6, insbesondere von -1 bis 3, vor allem von -0,5 bis 1,5, aufweisen. Übliche Eisen(III)-Gehalte in solchen wäßrig-sauren Wertmetall-Lösungen liegen bei 0,005 bis 100 g/l, insbesondere bei 0,5 bis 40 g/l, berechnet als Eisen(III)-sulfat, zusätzlich werden in der Regel 50 bis 250 g/l Säuren (meist Mineralsäuren), z.B. etwa 70 bis 100 g/l Schwefelsäure (berechnet 100 %) zugesetzt.

Die Kontaktierzeit beträgt üblicherweise 1 bis 60 Minuten, insbesondere 10 bis 30 Minuten. Die Temperatur während der Extraktion liegt normalerweise im Bereich von 20 bis 80°C, insbesondere 40 bis 60°C.

Im Sinne der Erfindung werden organische Lösungen der beschriebenen Aminomethylenphosphonsäure-Derivate eingesetzt. Als organische Lösungsmittel kommen beispielsweise aliphatische, cycloaliphatische oder aromatische Kohlenwasserstoffe oder Mischungen aus diesen mit hohem Siedepunkt, halogenierte Kohlenwasserstoffe, Ketone oder Ether mit hohem Siedepunkt oder auch Mischungen derartiger Verbindungen in Frage. Bevorzugt werden Mineralölkohlenwasserstoffe wie Kerosin und Leuchtpetroleum eingesetzt.

Die beschriebenen monomeren und oligomeren Aminomethylenphosphonsäure-Derivate haben in der Regel in den genannten organischen Lösungsmitteln eine Konzentration von 0,01 bis 8 mol/l, insbesondere 0,05 bis 3 mol/l, vor allem 0,1 bis 1 mol/l. Polymere Aminomethylenphosphonsäure-Derivate wie entsprechende Polyethylenimin- oder Polyvinylamin-Derivate weisen in der Regel Konzentrationen von 0,5 bis 800 g/l, insbesondere 5 bis 600 g/l, vor allem 50 bis 300 g/l, auf.

Letzlich spielen auch die Massenverhältnisse an eingesetzter organischer und wäßriger Phase eine Rolle, die in der Regel im Bereich organisch zu wäßrig von 1:10 bis 10:1, vorzugsweise 1:3 bis 3:1, insbesondere 1:2 bis 2:1, liegen.

Die erfindungsgemäße Solventextraktion kann im Labormaßstab und großtechnisch, diskontinuierlich und kontinuierlich (z.B. in einer Mixer-Settler-Anlage oder in pulsierenden Kolonnen) durchgeführt werden.

Die Abtrennung des extrahierten Eisens aus den organischen Lösungen und die Wiedergewinnung der eingesetzten Extraktionsmittel (Komplexbildner) und eventuell mitverwendeter weiterer Hilfsmittel kann noch üblichen Verfahren erfolgen.

Über die eigentlichen Extraktionsmittel (Komplexbildner) hinaus werden üblicherweise "Modifier" bei der Solventextraktion mitverwendet. Als "Modifier" werden solche Verbindungen bezeichnet, die entweder eine bessere oder schnellere Phasentrennung bewirken, den Phasenübergang der zu extrahierenden Komponente beschleunigen oder eine verbesserte Löslichkeit des gebildeten Metallkomplexes in der organischen Trägerphase erzielen. Aus dem Stand der Technik bekannte Modifier sind beispielsweise geradkettige oder verzweigte langkettige Alkohole mit 10 bis 22 C-Atomen wie Isodecanol, Isotridecanol oder Hexadecanol, Phenole oder Ester solcher Alkohole und Phenole mit niederen Carbonsäuren oder längerkettigen Fettsäuren.

Speziell für die beschrieben zur Solventextraktion von Eisenionen geeigneten Aminomethylenphosphonsäure-Derivate wurden neue Modifier entwickelt, welche zusammen mit diesen und auch anderen Extraktionsmitteln bei der Abtrennung von Eisen aber auch von anderen Metallen wie Kobalt, Kupfer, Vanadium, Cadmium, Nickel, Zink, Blei, Aluminium, Uran, Antimon, Chrom, Mangan, Silber, Palladium, Rhodium, Platin, Quecksilber, Plutonium oder Wismut mit hervorragenden Ergebnissen verwendet werden können.

Bei diesen neuen Modifiern handelt es sich um einen alkoxylierten langkettigen Alkohol der allgemeinen Formel III

R⁷ ―O― (XO)ₘ―H (III)

oder ein alkoxyliertes langkettiges Amin der allgemeinen Formel IV 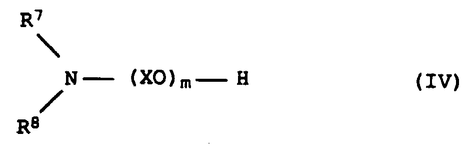 in denen
- R⁷: C₆- bis C₃₀-Alkyl, insbesondere C₈- bis C₂₀-Alkyl, oder C₆- bis C₃₀-Alkenyl, insbesondere C₈- bis C₂₀-Alkenyl, C₇-bis C₁₈-Aralkyl oder gegebenenfalls durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiertes C₆- bis C₁₄-Aryl bezeichnet,
- R⁸: für Wasserstoff, C₁- bis C₅-Alkyl, C₂- bis C₅-Alkenyl oder die Gruppierung -(XO)ₘ-H steht oder die Bedeutung von R⁷ hat,
- X: eine 1,2-Alkylengruppe mit 2 bis 30 C-Atomen, insbesondere mit 2 bis 4 C-Atomen, oder eine Gruppierung der Formel -CH2-CHR¹⁰-, in der R¹⁰ C₇- bis C₁₈-Aralkyl oder C₆- bis C₁₄-Aryl bezeichnet, welches durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein kann, bedeutet und
- m: für eine Zahl von 1 bis 20, insbesondere 2 bis 10, steht.

Die Modifier III und IV können nach bekannten Methoden durch Alkoxylierung der entsprechenden Alkohole oder Amine beispielsweise mit Ethylenoxid, Propylenoxid, Butylenoxid oder Styroloxid hergestellt werden.

Der Alkoxylierungsgrad m stellt üblicherweise einen Durchschnittswert dar, da Alkoxylierungen in der Regel zu Gemischen von Alkoxylaten führen. Dabei kann auch in diesen Gemischen noch unumgesetzter Alkohol R⁷-OH bzw. unumgesetztes Amin R⁷R⁸N-H mit vorliegen (hierfür wäre m-0).

Sowohl die bekannten Modifier als auch die neuen Modifier werden zusammen mit dem Extraktionsmittel (Komplexbildner) im Gew.-Verhältnis Extraktionsmittel zu Modifier von 99,5:0,5 bis 0,5:99,5, vorzugsweise 95:5 bis 5:95, insbesondere 80:20 bis 20:80, eingesetzt. Es können auch Mischungen verschiedener Modifiertypen verwendet werden. Die Anwendung erfolgt in den oben genannten organischen Lösungsmitteln.

Gegenstand der vorliegenden Erfindung sind auch zur solventextraktiven Abtrennung von Eisenionen aus wäßrigen Lösung geeignete Mischungen aus
A) 0,5 bis 99,5 Gew.-% eines oder mehrerer der beschriebenen kohlenwasserstofflöslichen Aminomethylenphosphonsäure-Derivate und
B) 99,5 bis 0,5 Gew.-% eines oder mehrerer alkoxylierter langkettiger Alkohole III und/oder Amine IV.

Diese Mischungen werden, wie beschrieben, in den oben genannten organischen Lösungsmitteln angewandt.

Durch die erfindungsgemäß als Extraktionsmittel bei der Solventextraktion verwendeten kohlenwasserstofflöslichen Aminomethylenphosphonsäure-Derivate ist es möglich, Eisenionen in einem hohen Grade selektiv aus wäßrigen Wertmetall-Lösungen, die beispielsweise Zink oder Kupfer als Wertmetall enthalten, abzutrennen. Die Beladungskapazität des erfindungsgemäßen Extraktionsmittels ist dabei überdurchschnittlich hoch. Durch Mitverwendung der neuen Modifier der Strukturen III und IV werden die schon hervorragenden Ergebnisse noch weiter verbessert.

### Beispiele

### Herstellung der Aminomethylenphosphonsäure-Derivate

Wenn nichts anderes angegeben ist, beziehen sich im folgenden Prozentangaben auf das Gewicht.

Die nach-stehend beschriebenen Reaktionsprodukte wurden direkt als organische Phase abgetrennt, mit einem organischen Lösungsmittel, in dem sie löslich sind, extrahiert oder aus der wäßrigen Phase mit Natriumsulfat ausgesalzen und anschließend wiederholt mit Wasser gewaschen. Der Phosphonomethylierungsgrad wurde über das P/N-Verhältnis mittels Elementaranalyse bestimmt.

### Beispiel 1

### Umsetzungsprodukt von Di-2-ethylhexylamin mit phosphoriger Säure und Formaldehyd

Es wurden 289,8 g (1,20 mol) Di-2-ethylhexylamin vorgelegt und 118,1 g (1,44 mol) phosphorige Säure in 160 ml Wasser gelöst zugetropft. Anschließend wurden 85,2 g konzentrierte Schwefelsäure, die mit 75 ml Wasser verdünnt worden waren, zudosiert. Das erhaltene Gemisch wurde auf ca. 100°C erhitzt und 247 g (3,0 mol) wäßrige Formaldehydlösung (36,5 %ig) wurden zugetropft. Es wurde 40 Stunden unter Rückfluß erhitzt. Die organische Phase wurde abgetrennt und 3 mal mit jeweils 500 ml Wasser gewaschen. Restwasser in der gewaschenen organischen Phase wurde im Wasserstrahlvakuum entfernt. Ausbeute: 370 g gelbes viskoses Öl (92 % d.Th.); Nebenprodukt: Methyl-di-(2-ethylhexylamin); Elementaranalyse: P_{gef.} 7,1 %, N_{gef.} 4,3 %.

### Beispiel 2

### Umsetzungsprodukt von Diisotridecylamin mit phosphoriger Säure und Formaldehyd

Es wurden 450 g (1,18 mol) Diisotridecylamin vorgelegt und 98,4 g (1,20 mol) phosphorige Säure in 240 ml Wasser gelöst zugetropft. Anschließend wurden 276,7 g konzentrierte Schwefelsäure, die mit 90 ml Wasser verdünnt worden waren, zudosiert. Das erhaltene Gemisch wurde auf ca. 100°C erhitzt und 197 g (2,4 mol) wäßrige Formaldehydlösung (36,5 %ig) wurden zugetropft. Es wurde 40 Stunden unter Rückfluß erhitzt. Die organische Phase wurde abgetrennt und 6 mal mit 750 ml Wasser gewaschen. Das Restwasser in der gewaschenen organischen Phase wurde im Wasserstrahlvakuum entfernt. Ausbeute: 484 g gelbes viskoses Öl (85 % % d.Th.); Nebenprodukt: Methyldiisotridecylamin: Elementaranalyse: P_{gef.} 5,2 %, N_{gef.} 3,0 %.

### Beispiel 3

### Umsetzungsprodukt von N-Oleylpropylendiamin mit phosphoriger Säure und Formaldehyd

Es wurden 99,2 g (0,31 mol) N-Oleylpropylendiamin vorgelegt und 147,6 g (1,8 mol) phosphorige Säure in 360 ml Wasser gelöst zugetropft. Anschließend wurden 300 g konzentrierte Schwefelsäure, die mit 95 ml Wasser verdünnt worden waren, zudosiert. Das erhaltene Gemisch wurde auf ca. 100°C erhitzt und 296 g (3,6 mol) wäßrige Formaldehydlösung (36,5 %ig) wurden zugetropft. Es wurde 25 Stunden bei ca. 100°C nachgerührt. Das Produkt wurde mit Natriumsulfat vollständig ausgesalzen, abgetrennt und 3 mal mit 750 ml Wasser gewaschen. Restwasser wurde im Wasserstrahlvakuum entfernt. Ausbeute: 175 g gelbbrauner Feststoff (96 % d.Th.); Methylierungsnebenprodukte; Elementaranalyse: P_{gef.} 11,6 , N_{gef.} 3,6 %.

### Beispiel 4

### Umsetzungsprodukt von N-Oleylpropylendiamin mit 1-Epoxydodecan und anschließend mit phosphoriger Säure und Formaldehyd

99,2 g (0,31 mol) N-Oleylpropylendiamin und 100 g Toluol wurden vorgelegt und auf 100°C erhitzt. Anschließend wurden 55,2 g (0,30 mol) 1-Epoxydodecan zugetropft und solange unter Rückfluß nachgerührt, bis kein Epoxid mehr nachgewiesen werden konnte (Preußmann-Test). Das erhaltene Produkt wurde vom Lösungsmittel befreit und weiter umgesetzt.

53,8 g des erhaltenen Produktes (0,106 mol) wurden vorgelegt und auf 50°C erhitzt. Anschließend wurden 32,8 (0,4 mol) phosphorige Säure, verdünnt mit 80 ml Wasser, und 92 g konzentrierte Schwefelsäure, die zuvor mit 80 g Wasser verdünnt worden waren, zudosiert. Die Temperatur wurde auf 100°C gesteigert und 66 g (0,79 mol) wäßrige Formaldehydlösung (36,5 %) und zusätzlich 300 ml Wasser wurden zugegeben. Anschließend wurde die Reaktionsmischung ca. 96 Stunden bei 95°C nachgerührt. Der organische Feststoff wurde abgetrennt und mehrmals mit Wasser gewaschen. Restwasser wurde im Wasserstrahlvakuum entfernt. Ausbeute: 58 g brauner Feststoff (80 % d.Th.); Analytik: P_{gef.} 4,9 %, N_{gef.} 3,6 %.

### Extraktionstests

Der Nachweis der Extrahierbarkeit von Eisen (III)-ionen aus wäßrigen stark schwefelsauren Lösungen wurde durch diskontinuierlicher Betriebsweise (Batch-Rührexperimente) geführt. Die Massenverhältnisse zwischen organischer und wäßriger Phase lagen bei ca. 1:2 bzw. 2:1. Die Extraktionen wurden bei Temperaturen von ca. 50°C durchgeführt. Der organische Komplexbildner wurde in Leuchtpetroleum gelöst, mit Modifiern versetzt und mit einer wäßrigen Lösung, die Eisenionen und freie Schwefelsäure enthielt, in innigen Kontakt gebracht. Dabei ging das Eisen von der wäßrigen in die organischen Phase über. Die Phasen wurden getrennt und die Metallgehalte mittels Atomabsorptionsspektroskopie (Flammen-AAS) bestimmt.

### Beispiel 5

### Bestimmung von Beladungskapazitäten für Fe(III) in der organischen Extraktionsphase

Die Untersuchungen wurden als Batch-Rührversuche im Rührkolben durchgeführt. 100 g einer synthetischen wäßrigen Fe(III)-Lösung (Zusammensetzung: 30 g/kg Fe(III), gelöst als Fe(III)-Sulfat, und 85 g/l freie Schwefelsäure) wurden 10 Minuten mit 50 g organischer Phase (Zusammensetzung: 7,5 % Extraktionsmittel, 5-20 % Modifier und 87,5 - 72,5 % Leuchtpetroleum*⁾) bei 50°C durchmischt. Anschließend wurden die Phasen getrennt und die Metallgehalte in der organischen Phase mittels Flammen-AAS bestimmt. Zum Vergleich wurde 2-Ethylhexylphosphonsäure-mono-2-ethylhexylester gemäß (1) herangezogen. Das Produkt aus Beispiel 3 erreichte in Kombination mit dem speziell für diesen Komplexbildner entwickelten Modifier B1 die relativ höchste Beladungskapazität für Fe(III) in der organischen Phase.

**Tabelle 1**

| zeigt die Ergebnisse dieser Bestimmungen: | | |
|---|---|---|
| Extraktionsmittel (Komplexbildner) [7,5 %] | Modifier [%] | Fe-Gehalt in der org. Phase [%] |
| Produkt aus Beispiel 1 | B2 [10] | 0,60 - 0,70 |
| Produkt aus Beispiel 2 | B2 [5] | 0,50 - 0,55 |
| Produkt aus Beispiel 3 | B1 [20] | 1,30-1,40 |
| Produkt aus Beispiel 4 | B1 [5] + B2 [5] | 0,50-0,60 |
| | | |
| Zum Vergleich: | | |
| 2-Ethylhexylphosphonsäuremono-2-ethylhexylester | B1 [20] | 0,03 |
| 2-Ethylhexylphosphonsäuremono-2-ethylhexylester | B2 [5] | 0,10 |
| B1 = mit 2,1 mol Ethylenoxid umgesetztes Diisotridecylamin | | |
| B2 = Isodecanol | | |

*) Leuchtpetroleum gemäß DIN 51 636 (Fa. Wintershall):

| | |
|---|---|
| Siedebereich | 180 - 250°C |
| Dichte (15°C) | 0,798 g/cm³ |
| Viskosität (20°C) | 2 mm²/s (cSt) |
| Flammpunkt AP | >55°C |
| Aromatengehalt (FIA) | 13 % |

### Beispiel 6

### Konzentrationsabhängige Bestimmung von Fe(III)-Beladungskapazitäten in organischer Phase, Zn(II)-Coextraktions-Untersuchungen

Zur Untersuchung des Einflusses der Komplexbildnerkonzentration auf die Fe(III)-Beladungskapazität in organischer Phase wurden jeweils 50 g organische Phase (Zusammensetzung: 7,5 - 25 % des jeweiligen Komplexbildners, 10 - 33 % Modifier, 42 - 82,5 % Leuchtpetroleum*)) und 100 g wäßrige Phase (Zusammensetzung: 2,7 % Fe(III), gelöst als Fe(III)-Sulfat, 6,3 % Zn(II), gelöst als Zn(II)-Sulfat, und 85 g/l Schwefelsäure (konz.)) 10 Minuten lang bei 50°C in einem Rührkolben innig durchmischt, die Phasen getrennt und die Metallgehalte mittels Atomabsorptionsspektroskopie (Flammen-AAS) bestimmt. Es wurden Fe(III)-Beladungskapazitäten von ca. 2 % erreicht. Die untersuchten Verbindungen zeigten aus Fe(III)/Zn(II)-Gemischlösungen gute Fe(III)-Selektivität.

**Tabelle 2**

| zeigt die Ergebnisse dieser Bestimmung: | | | |
|---|---|---|---|
| Extraktionsmittel (Komplexbildner) [%] | | Modifier [%] | Gehalt an Fe und Zn in der org. Phase [%] |
| Produkt aus Beispiel 1 | [7,5] | B2 [10] | 0,61 % Fe (<0,1 % Zn) |
| | [15] | B2 [20] | 1,10 % Fe (<0,1 % Zn) |
| | [25] | B2 [33] | 1,95 % Fe (<0,1 % Zn) |
| Produkt aus Beispiel 3 | [7,5] | B1 [20] | 1,36 % Fe (<0,15 % Zn) |
| | [10] | B1 [20] | 1,82 % Fe (<0,20 % Zn) |
| | [15] | B1 [20] | 2,32 % Fe (<0,25 % Zn) |

### Beispiel 7

### Fe(III)-Abtrennung bei einem Massenverhältnis organisch zu wäßrig von 1:2

Zur Untersuchung des Einflusses der Phasenverhältnisse auf die Fe(III)-Extraktionswirkung wurden jeweils 50 g organische Phase (Zusammensetzung: 7,5 % Komplexbildner, 5 - 20 % Modifier, 72,5 - 87,5 % Leuchtpetroleum*⁾) und 100 g wäßrige Phase (Zusammensetzung: 0,4 % Fe(III), gelöst als Fe(III)-Sulfat, und 85 g/l Schwefelsäure) 10 Minuten lang bei 50°C in einem Rührkolben innig durchmischt, die Phasen getrennt und die Rest-Fe-Gehalte in der wäßrigen Phase mittels Flammen-AAS bestimmt. Das Produkt aus Beispiel 3 war in der Lage, annähern alles Fe(III) aus der stark schwefelsauren wäßrigen Lösung abzutrennen.

**Tabelle 3**

| zeigt die Ergebnisse dieser Bestimmungen: | | |
|---|---|---|
| Extraktionsmittel (Komplexbildner) [7,5 %] | Modifier [%] | Gehalt an Fe in der wäßrigen Phase [%] |
| Produkt aus Beispiel 1 | B2 [10] | 0,15 |
| Produkt aus Beispiel 2 | B2 [5] | 0,20 |
| Produkt aus Beispiel 3 | B1 [20] | <0,01 |
| Produkt aus Beispiel 4 | B1 [5] + B2 [5] | 0,17 |

### Beispiel 8

### Fe(III)-Abtrennung bei einem Massenverhältnis organisch zu wäßrig von 2:1

Zur Untersuchung des Einflusses der Phasenverhältnisse auf die Fe(III)-Extraktionswirkung wurden jeweils 100 g organische Phase (Zusammensetzung: 7,5 % Komplexbildner, 5 - 20 % Modifier, 72,5 - 87,5 % Leuchtpetroleum*)) und 50 g wäßrige Phase (Zusammensetzung: 1,46 % Fe(III), gelöst als Fe(III)-Sulfat, und 85 g/l Schwefelsäure) 10 Minuten lang bei 50°C in einem Rührkolben innig durchmischt, die Phasen getrennt und die Rest-Fe-Gehalte in der wäßrigen Phase mittels Flammen-AAS bestimmt. Das Produkt aus Beispiel 3 war auch hier in der Lage, annähernd alles Fe(III) aus der stark schwefelsäuren wäßrigen Lösung abzutrennen:

**Tabelle 4**

| zeigt die Ergebnisse dieser Bestimmungen: | | |
|---|---|---|
| Extraktionsmittel (Komplexbildner) [7,5 %] | Modifier [%] | Gehalt an Fe in der wäßrigen Phase [%] |
| Produkt aus Beispiel 1 | B2 [10] | 0,39 |
| Produkt aus Beispiel 2 | B2 [5] | 0,50 |
| Produkt aus Beispiel 3 | B1 [20] | <0,01 |
| Produkt aus Beispiel 4 | B1 [5] + B2 [5] | 0,40 |

## Patentansprüche

1. Verwendung von kohlenwasserstofflöslichen Aminomethylenphosphonsäure-Derivaten, welche das Strukturelement der Formel I 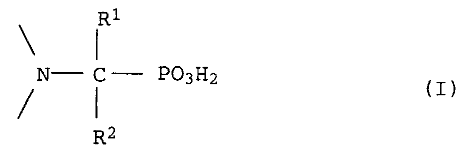 enthalten, wobei R¹ und R² für Wasserstoff, C₁- bis C₃₀-Alkyl, welches zusätzlich bis zu 15 Hydroxylgruppe tragen und/oder durch bis zu 14 nicht benachbarte Sauerstoffatome unterbrochen sein kann, C₂- bis C₃₀-Alkenyl, C₇- bis C₁₈-Aralkyl oder C₆- bis C₁₄-Aryl, welches durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein kann, steht, zur solventextraktiven Abtrennung von Eisenionen aus wäßrigen Lösungen.

2. Verwendung von kohlenwasserstofflöslichen Aminomethylenphosphonsäure-Derivaten, welche das Strukturelement der Formel Ia 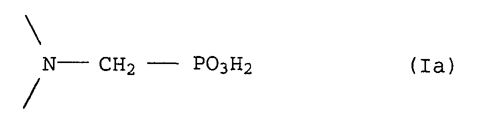 enthalten, nach Anspruch 1.

3. Verwendung von kohlenwasserstofflöslichen Aminomethylenphosphonsäure-Derivaten der allgemeinen Formel II 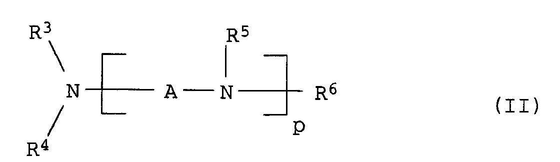 in der
R³ bis R⁶ jeweils für Wasserstoff, C₁- bis C₃₀-Alkyl, welches zusätzlich bis zu 15 Hydroxylgruppen tragen und/oder durch bis zu 14 nicht benachbarte Sauerstoffatome unterbrochen sein kann, C₂- bis C₃₀-Alkenyl, C₇- bis C₁₈-Aralkyl, C₆- bis C₁₄-Aryl, welches durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein kann, oder Gruppierungen der Formel -CR¹R²-PO₃H₂, -CH₂-COOH oder -CH₂-CH(OH)-R¹ steht, wobei mindestens einer der Reste R³ bis R⁶ für die Gruppierung -CR¹R²-PO₃H₂ und mindestens ein weiterer für C₆- bis C₃₀-Alkyl, C₆- bis C₃₀-Alkenyl, C₇- bis C₁₈-Aralkyl, gegebenenfalls substituiertes C₆- bis C₁₄-Aryl oder für die Gruppierung -CH₂-CH(OH)-R⁹, wobei R⁹ C₆- bis C₃₀-Alkyl, C₆- bis C₃₀-Alkenyl, C₇- bis C₁₈-Aralkyl oder gegebenenfalls substituiertes C₆- bis C₁₄-Aryl bedeutet, steht und wobei R¹ und R² die oben genannten Bedeutungen haben,
A eine C₁- bis C₁₂-Alkylengruppe bezeichnet, welche zusätzlich bis zu drei C₁- bis C₃₀-Alkylgruppen, C₂- bis C₃₀-Alkenylgruppen, C₇- bis C₁₈-Aralkylgruppen oder C₆- bis C₁₄-Arylgruppen, welche ihrerseits wiederum durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiert sein können, als Substituenten tragen können, wobei bei Vorliegen mehrerer Gruppen A diese gleich oder verschieden sein können, und
p eine Zahl 0 bis 30 000 bedeutet,
nach Anspruch 1.

4. Verwendung von Polyalkylenpolyaminen und Polyalkylenpolyamiden mit mindestens einer Gruppierung der Formel -CR¹R²-PO₃H₂ und mindestens einem weiteren C₆- bis C₃₀-Alkylrest, C₆- bis C₃₀-Alkenylrest, C₇- bis C₁₈-Aralkylrest, gegebenenfalls substituierten C₆- bis C₁₄-Arylrest oder einer Gruppierung der Formel -CH₂-CH(OH)-R⁹, wobei R¹, R² und R⁹ die oben genannten Bedeutungen haben, als kohlenwasserstofflösliche Aminomethylenphosphonsäure-Derivate nach Anspruch 1.

5. Verwendung von kohlenwasserstofflöslichen Aminomethylenphosphonsäure-Derivaten nach den Ansprüchen 1 bis 4 zur solventextraktiven Abtrennung von Eisenionen aus stark sauren wäßrigen Lösungen mit einem pH-Wert von kleiner 0 bis 6.

6. Verwendung von kohlenwasserstofflöslichen Aminomethylenphosphonsäure-Derivaten nach den Ansprüchen 1 bis 5, wobei zusätzlich als Modifier ein alkoxylierter langkettiger Alkohol der allgemeinen Formel III
R⁷ ―O―(XO)ₘ― H (III)
oder ein alkoxyliertes langkettiges Amin der allgemeinen Formel IV 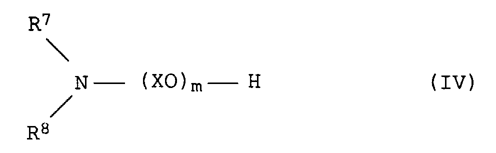 in denen
R⁷ C₆- bis C₃₀-Alkyl, C₆- bis C₃₀-Alkenyl, C₇- bis C₁₈-Aralkyl oder gegebenenfalls durch bis zu drei C₁- bis C₁₂-Alkylgruppen, C₁- bis C₁₂-Alkoxygruppen, Halogenatome, Cyanogruppen, Hydroxylgruppen oder C₁- bis C₄-Alkoxycarbonylgruppen substituiertes C₆- bis C₁₄-Aryl bezeichnet,
R⁸ für Wasserstoff, C₁- bis C₅-Alkyl, C₂- bis C₅-Alkenyl oder die Gruppierung - (XO)ₘ-H steht oder die Bedeutung von R⁷ hat,
x eine 1,2-Alkylengruppe mit 2 bis 30 C-Atomen oder eine Gruppierung der Formel -CH₂-CHR¹⁰-, in der R¹⁰ C₇- bis C₁₈-Aralkyl oder C₆- bis C₁₄-Aryl bezeichnet, welches durch bis zu drei C₁- bis C₁₂-Alkoxygruppen, Halogenatome, Cyanogruppen, Hydroxylgruppen oder C₁- bis C₄-Alkoxycarbonylgruppen substituiert sein kann, bedeutet und
m für eine Zahl von 1 bis 20 steht,
eingesetzt wird.

7. Zur solventextraktiven Abtrennung von Eisenionen aus wäßrigen Lösungen geeignete Mischungen aus
A) 0,5 bis 99,5 Gew.-% eines oder mehrerer kohlenwasserstoff löslicher Aminomethylenphosphonsäure-Derivate gemäß den Ansprüchen 1 bis 4 und
B) 99,5 bis 0,5 Gew.-% eines oder mehrerer alkoxylierter langkettiger Alkohole III und/oder Amine IV gemäß Anspruch 6.

## Claims

1. The use of hydrocarbon-soluble aminomethylenephosphonic acid derivatives comprising the structural element of the formula I 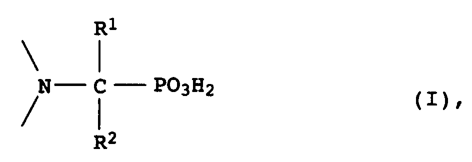 where R¹ and R² are hydrogen, C₁-C₃₀-alkyl which can additionally bear up to 15 hydroxyl groups and/or be interrupted by up to 14 non-adjacent oxygen atoms, C₂-C₃₀-alkenyl, C₇-C₁₈-aralkyl or C₆-C₁₄-aryl which can be substituted by up to three C₁-C₁₂-alkyl groups, C₁-C₁₂-alkoxy groups, halogen atoms, cyano groups, hydroxyl groups or C₁-C₄-alkoxycarbonyl groups, for the solvent extraction of iron ions from aqueous solutions.

2. The use as claimed in claim 1 of hydrocarbon-soluble aminomethylenephosphonic acid derivatives comprising the structural element of the formula Ia

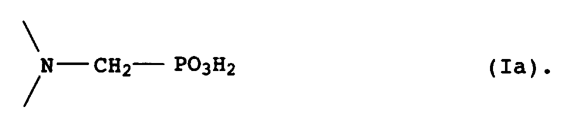

3. The use as claimed in claim 1 of hydrocarbon-soluble aminomethylenephosphonic acid derivatives of the formula II 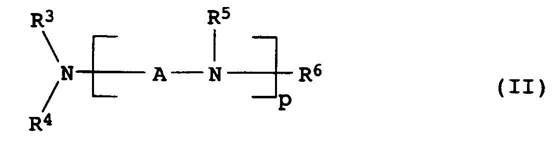 where
R³ to R⁶ are each hydrogen, C₁-C₃₀-alkyl which can additionally bear up to 15 hydroxyl groups and/or be interrupted by up to 14 non-adjacent oxygen atoms, C₂-C₃₀-alkenyl, C₇-C₁₈-aralkyl, C₆-C₁₄-aryl which can be substituted by up to three C₁-C₁₂-alkyl groups, C₁-C₁₂-alkoxy groups, halogen atoms, cyano groups, hydroxyl groups or C₁-C₄-alkoxycarbonyl groups, or are each a group of the formula -CR¹R²-PO₃H₂, -CH₂-COOH or -CH₂-CH(OH)-R¹, where at least one of the radicals R³ to R⁶ is the group -CR¹R²-PO₃H₂ and at least a further one of these radicals is C₆-C₃₀-alkyl, C₆-C₃₀-alkenyl, C₇-C₁₈-aralkyl, unsubstituted or substituted C₆-C₁₄-aryl or the group -CH₂-CH(OH)-R⁹, where R⁹ is C₆-C₃₀-alkyl, C₆-C₃₀-alkenyl, C₇-C₁₈-aralkyl or unsubstituted or substituted C₆-C₁₄-aryl, and where R¹ and R² are as defined above,
A is a C₁-C₁₂-alkylene group which can additionally bear as substituents up to three C₁-C₃₀-alkyl groups, C₂-C₃₀-alkenyl groups, C₇-C₁₈-aralkyl groups or C₆-C₁₄-aryl groups which can in turn be substituted by up to three C₁-C₁₂-alkyl groups, C₁-C₁₂-alkoxy groups, halogen atoms, cyano groups, hydroxyl groups or C₁-C₄-alkoxycarbonyl groups, where, if a plurality of groups A are present, these can be identical or different, and
p is a number from 0 to 30,000.

4. The use as claimed in claim 1 of polyalkylenepolyamines and polyalkylenepolyamides containing at least one group of the formula -CR¹R²-PO₃H₂ and at least one further C₆-C₃₀-alkyl radical, C₆-C₃₀-alkenyl radical, C₇-C₁₈-aralkyl radical, unsubstituted or substituted C₆-C₁₄-aryl radical or a group of the formula -CH₂-CH(OH)-R⁹, where R¹, R² and R⁹ are as defined above, as hydrocarbon-soluble aminomethylenephosphonic acid derivatives.

5. The use of hydrocarbon-soluble aminomethylenephosphonic acid derivatives as claimed in any of claims 1 to 4 for the solvent extraction of iron ions from strongly acid aqueous solutions having a pH of from less than 0 to 6.

6. The use of hydrocarbon-soluble aminomethylenephosphonic acid derivatives as claimed in any of claims 1 to 5, wherein additional use as modifier is made of an alkoxylated long-chain alcohol of the formula III
R⁷ ―O―(XO)ₘ―H (III)
or an alkoxylated long-chain amine of the general formula IV 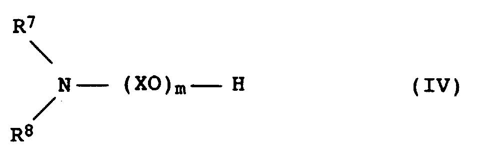 where
R⁷ is C₆-C₃₀-alkyl, C₆-C₃₀-alkenyl, C₇-C₁₈-aralkyl or C₆-C₁₄-aryl which may be unsubstituted or substituted by up to three C₁-C₁₂-alkyl groups, C₁-C₁₂-alkoxy groups, halogen atoms, cyano groups, hydroxyl groups or C₁-C₄-alkoxycarbonyl groups,
R⁸ is hydrogen, C₁-C₅-alkyl, C₂-C₅-alkenyl or the group -(XO)ₘ-H or is as defined for R⁷,
X is a 1,2-alkylene group having from 2 to 30 carbon atoms or a group of the formula -CH₂-CHR¹⁰-, where R¹⁰ is C₇-C₁₈-aralkyl or C₆-C₁₄-aryl which may be substituted by up to three C₁-C₁₂-alkoxy groups, halogen atoms, cyano groups, hydroxyl groups or C₁-C₄-alkoxycarbonyl groups, and
m is a number from 1 to 20.

7. A mixture suitable for the solvent extraction of iron ions from aqueous solutions and comprising
A) from 0.5 to 99.5% by weight of one or more hydrocarbon-soluble aminomethylenephosphonic acid derivatives as claimed in any of claims 1 to 4 and
B) from 99.5 to 0.5% by weight of one or more alkoxylated long-chain alcohols III and/or amines IV as claimed in claim 6.

## Revendications

1. Utilisation de dérivés de l'acide aminométhylènephosphonique solubles dans les hydrocarbures, qui contiennent l'élément structural de formule I 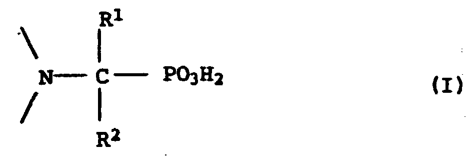 dans laquelle R¹ et R² représentent chacun un atome d'hydrogène, un groupe alkyle en C₁ à C₃₀ pouvant porter en outre jusqu'à 15 groupes hydroxyle, et/ou peut être interrompu par jusqu'à 14 atomes d'oxygène non-voisins, alcényle en C₂ à C₃₀, aralkyle en C₇ à C₁₈ ou aryle en C₆ à C₁₄, qui peut être substitué jusqu'à trois fois par des groupes alkyle en C₁ à C₁₂, des groupes alcoxy en C₁ à C₁₂, des atomes d'halogène, des groupes cyano, des groupes hydroxyle ou des groupes (alcoxy en C₁ à C₄)carbonyle, pour séparer par extraction aux solvants des ions fer de solutions aqueuses.

2. Utilisation de dérivés de l'acide aminométhylènephosphonique solubles dans les hydrocarbures selon la revendication 1, qui contiennent l'élément structural de formule Ia

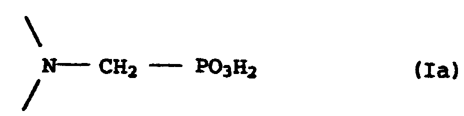

3. Utilisation de dérivés de l'acide aminométhylènephosphonique solubles dans les hydrocarbures selon la revendication 1 de formule générale II 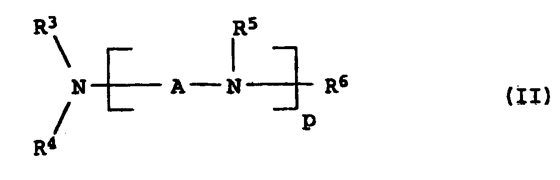 dans laquelle
R³ à R⁶ représentent chacun un atome d'hydrogène, un groupe alkyle en C₁ à C₃₀ pouvant porter en outre jusqu'à 15 groupes hydroxyle et/ou peut être interrompu par jusqu'à 14 atomes de carbone non-voisins, alcényle en C₂ à C₃₀, aralkyle en C₇ à C₁₈, aryle en C₆ à C₁₄, qui peut être jusqu'à trois fois substitué par des groupes alkyle en C₁ à C₁₂, des groupes alcoxy en C₁ à C₁₂, des atomes d'halogène, des groupes cyano, des groupes hydroxyle ou des groupes (alcoxy en C₁ à C₄)carbonyle, ou encore un groupement de formule -CR¹R²-PO₃H₂, -CH₂-COOH ou -CH₂-CH(OH)-R¹, au moins l'un des radicaux R³ à R⁶ étant le groupement -CR¹R²-PO₃H₂, et au moins un autre de ces radicaux étant un groupe alkyle en C₆ à C₃₀, alcényle en C₆ à C₃₀, aralkyle en C₇ à C₁₈, aryle en C₆ à C₁₄ éventuellement substitué, ou encore le groupement -CH₂-CH(OH)-R⁹, où R⁹ est un groupe alkyle en C₆ à C₃₀, alcényle en C₆ à C₃₀, aralkyle en C₇ à C₁₈ ou aryle en C₆ à C₁₄ éventuellement substitué, et R¹ et R² ayant les significations données ci-dessus,
A désigne un groupe alkylène en C₁ à C₁₂, qui peut de plus porter en tant que substituants jusqu'à trois groupes alkyle en C₁ à C₃₀, alcényle en C₂ à C₃₀, aralkyle en C₇ à C₁₈ ou aryle en C₆ à C₁₄, qui pour leur part peuvent être substitués jusqu'à trois fois par des groupes alkyle en C₁ à C₁₂, des groupes alcoxy en C₁ à C₁₂, des atomes d'halogène, des groupes cyano, des groupes hydroxyle ou des groupes (alcoxy en C₁-C₄)carbonyle, auquel cas, en présence de plusieurs groupes A, ces derniers peuvent être identiques ou différents, et
p est un nombre de 0 à 30 000.

4. Utilisation, en tant que dérivés de l'acide aminométhylènephosphonique solubles dans l'eau selon la revendication 1, de polyalkylène-polyamines et de polyalkylènepolyamides ayant au moins un groupement de formule -CR¹R²-PO₃H₂ et au moins un autre radical alkyle en C₆ à C₃₀, alcényle en C₆ à C₃₀, aralkyle en C₇ à C₁₈, aryle en C₆ à C₁₄ éventuellement substitué, ou un groupement de formule -CH₂-CH(OH)-R⁹, où R¹, R² et R⁹ ont les significations données ci-dessus.

5. Utilisation de dérivés de l'acide aminométhylènephosphonique solubles dans les hydrocarbures selon les revendications 1 à 4, pour séparer par extraction aux solvants des ions fer de solutions aqueuses fortement acides, ayant un pH de moins de 0 à 6.

6. Utilisation de dérivés de l'acide aminométhylènephosphonique solubles dans les hydrocarbures selon les revendications 1 à 5, dans lequel on utilise en outre en tant que modifiant un alcool alcoxylé à longue chaîne de formule III
R⁷ - O - (XO)ₘ - H (III)
ou une amine alcoxylée à longue chaîne de formule générale Iv 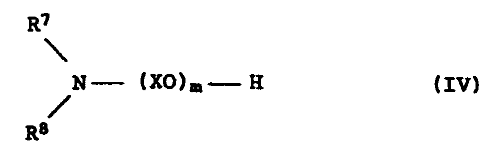 dans lesquelles :
R⁷ est un groupe alkyle en C₆ à C₃₀, alcényle en C₆ à C₃₀, aralkyle en C₇ à C₁₈, ou aryle en C₆ à C₁₄ éventuellement substitué jusqu'à trois fois par des groupes alkyle en C₁ à C₁₂, des groupes alcoxy en C₁ à C₁₂, des atomes d'halogène, des groupes cyano, des groupes hydroxyle ou des groupes (alcoxy en C₁ à C₄)carbonyle,
R⁸ est un atome d'hydrogène, un groupe alkyle en C₁ à C₅, alcényle en C₂ à C₅, ou le groupement -(XO)ₘ-H, ou encore a les significations de R⁷,
X est un groupe 1,2-alkylène ayant de 2 à 30 atomes de carbone ou un groupement de formule -CH₂CHR¹⁰-, dans laquelle R¹⁰ est un groupe aralkyle en C₇ à C₁₈ ou aryle en C₆ à C₁₄, qui peut être jusqu'à trois fois substitué par des groupes alcoxy en C₁ à C₁₂, des atomes d'halogène, des groupes cyano, des groupes hydroxyle ou des groupes (alcoxy en C₁ à C₄)-carbonyle, et
m est un nombre de 1 à 20.

7. Mélanges convenant à la séparation, par extraction aux solvants, d'ions fer de solutions aqueuses, constitués
A)de 0,5 à 99,5 % en poids d'un ou plusieurs dérivés de l'acide aminométhylènephosphonique solubles dans les hydrocarbures selon les revendications 1 à 4, et
B)de 99,5 à 0,5 % en poids d'un ou plusieurs alcools alcoxylés à longue chaîne III et/ou amines alcoxylées à longue chaîne IV selon la revendication 6.
